# EUROPEAN PATENT SPECIFICATION

(11) **EP 0 443 459 B1**
(45) Date of publication and mention of the grant of the patent: **18.12.1996**
(21) Application number: 91102191.3
(22) Date of filing: 15.02.1991
(51) Int. Cl.: B29C 70/00, D02G 3/22, D02G 3/48, F16G 1/08, B29K 21/00, B29K 105/08

(54) **Fiber reinforced rubber**
Faserverstärkter Gummi
Caoutchouc renforcé de fibres

(30) Priority: 23.02.1990 JP 43349/90
(43) Date of publication of application: 28.08.1991
(73) Proprietor: BANDO CHEMICAL INDUSTRIES, LIMITED, Hyogo-ku Kobe-shi (JP)
(72) Inventor: Nakanishi, Yasuyuki, Bando, 3-chome, Hyogo-ku, Kobe-shi (JP); Onoe, Susumu, Bando, 3-chome, Hyogo-ku, Kobe-shi (JP); Matsuoka, Hiroshi, Bando, 3-chome, Hyogo-ku, Kobe-shi (JP)
(74) Representative: Gauger, Hans-Peter, Dipl.-Ing.

(56) References cited:
- EP-A- 0 069 957
- EP-A- 0 206 591
- DE-A- 3 718 193
- JP-A- 2 014 054
- JP-A-59 019 744
- US-A- 1 400 301
- PATENT ABSTRACTS OF JAPAN vol. 005, no. 183 (M-097)21 November 1981 & JP-A-56 103 008 (BANDO CHEM IND LTD)
- PATENT ABSTRACTS OF JAPAN vol. 014, no.143 (C-0703) 19 March 1990
- PATENT ABSTRACTS OF JAPAN vol. 008, no. 112 (M-298) 25 May 1984

## Description

### BACKGROUND OF THE INVENTION

The present invention relates to a fiber-reinforced rubber and more particularly to a reinforcement embedded in a rubber of the kind as described in US-A-4 681 558.

Since high plessley tensile strength, high elasticity, high dimensional stability, and high adhesive strength has been required for rubbers such as a belt, a tire, and a hose, a reinforcing cord constructed by fibers or a reinforcing canvas is embedded in a rubber. Generally, cords of twisted yarns are used for the reinforcement. The yarns may be all twisted, only half of them twisted, or lang lay. The yarns, all of them twisted, are most popular as a reinforcement for a rubber.

However, monofilaments rub each other with sharp angle in a part of a rubber having reinforcement of the all twisted yarn and accordingly, the yarn is worn out, broken, or decreased in plessley tensile strength from that rubbed part after short period of usage. Therefore, the flex fatigue is lowered.

Japanese Patent Application Laying Open Gazette No.59-19744 discloses a fiber-reinforced rubber wherein the reinforcement is consisted of cords of which half of the yarns are twisted, or of lang lay to solve the above problem (flex fatigue).

However, a rubber reinforced by cords of only half of the yarns twisted or lang lay is lowered in elongation and rate of tensile elasticity after dipping process, comparing with a rubber reinforced by cords of all of the yarns twisted. This results in lower dimensional stability.

On the other hand braided cords have also been used for various purposes.

US-A-4 681 558 thusly discloses a reinforced belt assembly comprising as a reinforcement braided cords made of metallic reinforcing member such as a cable discontinuous in length and a plurality of non-metallic carrier members braided about the same. EP-A-206 591 discloses a reinforced inorganic composite such as concrete comprising as a reinforcement braided cords made of organic, inorganic or metallic fibers and impregnated with a bonding agent.

JP-A-2 014 054 discloses braided cords being twisted of four inorganic yarns with a S-twist to the left and of four inorganic yarns with a Z-twist to the right with the use of a cord braiding machine in which the respective bobbins are rotated clockwise and anticlockwise, respectively.

Cylindrically braided cords which need more than four and even numbered yarns to make a cylindrical configuration generally surpass a twisted cord in flex fatigue and dimensional stability due to their constructional characteristics. Therefore, cylindrically braided cords will improve both the flex fatigue resistance and dimensional stability if used as a reinforcement for a rubber.

Moreover, in case that cylindrically braided cords are used for the reinforcement of a rubber, if yarns constructing the cords are twisted, the cords are arranged orderly and consequently, higher strength of a cylindrically braided cord and longer service life of a rubber is expected. If all yarns, first twisted to the right and first twisted to the left, are twisted in the same direction, the cylindrically braided cord may possess a direction. A rubber reinforced by such a cylindrically braided cord possessing a direction may not obtain, however, a satisfactory result in flex fatigue resistance. From the above reason, yarns, first twisted to the right and first twisted to the left, need to be turned in the reverse direction of the first twist. However, when even yarns, first twisted to the right and first twisted to the left, are turned in the reverse direction of the first twist, the ideal dynamic adhesive strength may not be obtained.

### SUMMARY OF THE INVENTION

The object of the present invention is to use a cylindrically braided cord instead of a twisted cord for a reinforcement, to specify direction of yarns, and to properly set a first twisting angle of a yarn and final twisting angle of a cylindrically braided cord so as to provide a rubber with high flex fatigue, dimensional stability, and longer service life. A further object is to improve the dynamic adhesive strength of a rubber.

According to the present invention, the reinforcement embedded in a rubber is constructed by cylindrically braided cords comprising each more than four and even numbered yarns which are each either of a S-twist, twisted to the right, or of a Z-twist, twisted to the left, with an angle difference between a first twisting angle of each yarn and a final twisting angle of a cylindrically braided cord being set within 10°. Also, a monofilament angle with respect to the axial line of the cylindrically braided cord is set to be less than 10°.

### BRIEF DESCRIPTION OF THE DRAWING

Fig.1 is an enlarged vertical side section of a cylindrically braided cord.

Fig.2 is an enlarged vertical front section of a cylindrically braided cord.

Fig.3 is an enlarged view of a yarn twisted to the right.

Fig.4 is an enlarged vertical front section of a toothed belt.

Fig.5 is an explanatory drawing of the testing system for a flex fatigue.

Fig.6 is a map showing relation between an monofilament angle to an axial line of a cylindrically braided cord and a dynamic adhesive strength.

### DESCRIPTION OF THE PREFERRED EMBODIMENT

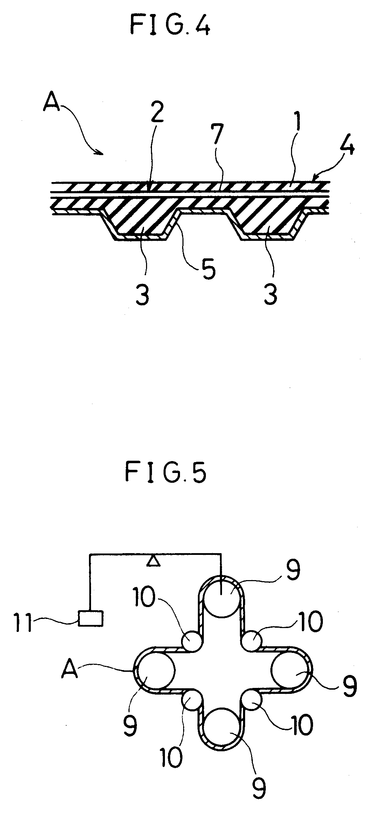

Fig.4 illustrates a toothed belt A as a fiber-reinforced rubber. The toothed belt A comprises a belt base 4 having a stretching rubber ply 1 and a plurality of teeth 3 formed on one side thereof (underside of the belt base in Fig.4) and made of the same material, a rubber, as the stretching rubber ply 1 (only two teeth are shown in Fig.4). A fiber reinforcement 2 is embedded in the stretching rubber ply 1 of the belt base 4. A canvas layer 5 is adhered to the surface of the teeth 3 of belt base 4.

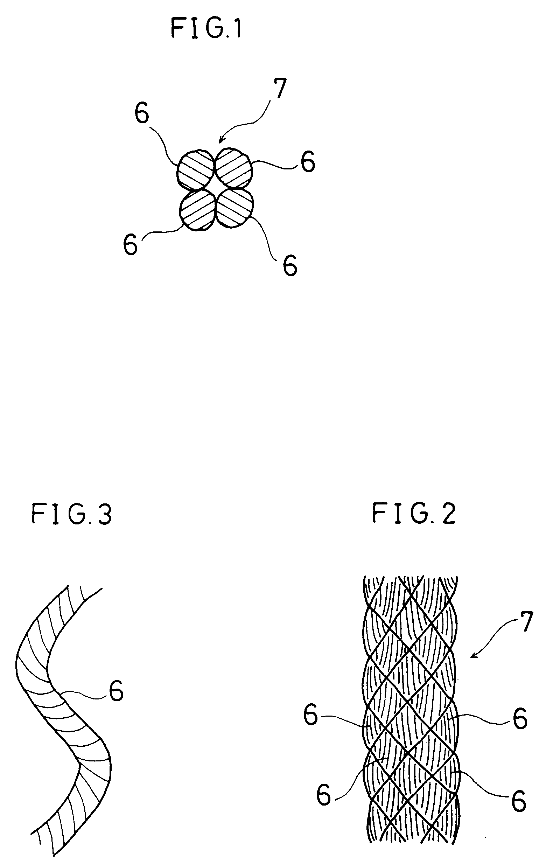

The reinforcement 2, as enlargely shown in Figs.1 and 3, is constructed by cylindrically braided cords 7 of more than four and even numbered yarns 6 (four yarns in the present embodiment). Each yarn is either a S-twist, twisted to the right (refer to Fig.3), or a Z-twist, twisted to the left. An angle difference between the first twisting angle of yarns 6 and the final twisting angle of cylindrically braided cords 7 is further set less than 10°.

The yarns 6 may be an inorganic fiber, an organic fiber, or a metallic fiber. Further, a short or long fiber spun yarn or combination of those can be used for the yarns 6 according to the required performance of the toothed belt A. Also, the number of yarns 6 can be any even numbers if it is more than four. In order to make a cord of cylindrical configuration, more than four and even numbered yarns are required. An industrial braiding machine cannot make a cord of a cylindrical configuration by using odd numbered yarns when yarns of the same denier number are used. Also, the total denier number and the number of monofilament vary according to the required performance of the toothed belt A. The error of twisting angle of the S-twist and Z-twist is set within ±3°. When the all twisted yarns or lang lay are used for the yarns 6, the twisting direction and the number of twists refer to the final twists.

The cylindrically braided cord 7 undergoes an adhesive process in which the cord is soaked into adhesive combined with epoxy resin, isocyanate compound, ethylene urea compound, and resorcin formalin latex (RFL), etc. and a stretching process before it is embedded in the stretching rubber ply 1. Dipping process is preferable for the adhesive process in order to soak adhesive evenly from surface to inside of it.

The result of a flex fatigue test is shown in Table 1, comparing the above constructed toothed belt A with a comparable example. The numerals of Table 1 show a pulling adhesive strength of a cylindrically braided cord.

### 〈Toothed Belt A According to the Present Invention〉

Four 1500de (the number of total denier is 6000de) Kevlar (product of DuPont) composed of aramide fibers are used for a cylindrically braided cord 7 constructing a reinforcement 2.

S-twist is the yarn twisted to the right and having a twisting angle 20° and Z-twist is the yarn twisted to the left and having a twisting angle 20°. Four yarns turn in the direction contrary to the first twisting direction and are used for the reinforcement having the twisting angle 20° of the cylindrically braided cord 7. The cylindrically braided cord 7 is dipped into the isoayanate compound so as to form a sub-coat ply, then it is dipped into the adhesive combination liquid of resorcin formalin latex (RFL) so as to form a second-coat ply, further it is dipped into chloroprene rubber so as to form a top-coat ply, and finally a stretching process is carried out with 1g/de tension. The toothed belt A wherein the reinforcement 2 composed of a plurality of the cylindrically braided cords 7 is embedded in the belt base 4 is obtained by the following steps: a plurality of cylindrically braided cords 7 which finished the stretching process is put spirally on the stretching rubber ply 1 of the chloroprene rubber, and the teeth 3 of the chloroprene rubber are formed on it so that the cylindrically braided cord 7 is embedded therein, thereafter, the nylon cloth 5 is adhered to the surface of teeth 3 and the rubber is cured. The adhesive is soaked evenly from the surface to the inside of the cylindrically braided cord 7 during the adhesive process.

### 〈Toothed Belt of Comparable Example〉

S-twist is twisted to the right and having the twisting angle 5° ; and Z-twist is twisted to the left and having the twisted angle 5° . The twisting angle of the cylindrically braided cord is 25°. Other features are the same as the belt of the present invention.

### 〈Test on Flex Fatigue〉

The test was carried out by the system shown in Fig.5, where the toothed belt A is wound around four large pulleys 9 and four small pulleys 10 disposed between large pulleys 9, and a predetermined tension is applied to the toothed belt A by a weight 11. The toothed belt A is run, and the pulling adhesive strength is measured. The small pulleys 10 are 30mm in diameter. One cycle is defined so that the toothed belt A goes through all the four small pulleys 10, i.e., the number of belt flex is four.

**TABLE 1**

| | Belt Flex Number | | |
|---|---|---|---|
| | 1X10⁶ | 1X10⁷ | 1X10⁸ |
| Present Embodiment | 60.5% | 58.7% | 58.9% |
| Comparable example | 62.4% | 57.5% | 47.5% |

As shown by the test data in table 1, for example, at the belt flex number 1X10⁸, the pulling adhesive strength of the present invention is 58.9%, which is little decrease in strength. However, the pulling adhesive strength of the comparable example is 47.5%, which is great decrease in strength. This big difference between the two belts results from the twisting angle of the yarn 6 which is the same as the twisting angle of the cylindrically braided cord 7. The monofilament angle to the axial line of the cylindrically braided cord 7 is 0°. Therefore, higher resistance of the monofilament to shearing stress by a matrix rubber is obtained. The toothed belt A possesses greater dynamic adhesive strength.

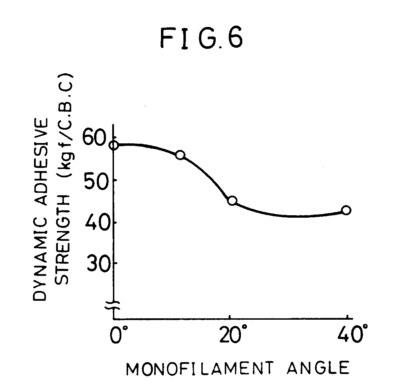

Fig.6 shows the relation between monofilament angle to the axial line of the cord on the surface of the cylindrically braided cord 7 of the toothed belt A and dynamic adhesive strength (kgf/C.B.C). Here, C.B.C stands for the cylindrically braided cord. The test is carried out under the same condition as the test of table 1 and the belt is run at 1X10⁸ belt flex. The test data show that the dynamic adhesive strength is greater when the monofilament angle to the axial line of the cord is less than 10°.

In this embodiment, the reinforcement 2 is constructed by the cylindrically braided cords 7 which are made of more than four and even numbered yarns. The yarns are twisted to the right as S-twist and 6 twisted to the left as Z-twist. The angle difference between the twisting angle of the yarns 6 and the twisting angle of the cylindrically braided cord 7 is set less than 10°.

The cylindrically braided cord 7 is characterized in that even stress is applied to the monofilament composing the yarns and the direction of the yarns 6 is offset by the S-twist and Z-twist. This results in higher flex fatigue and longer service life of the toothed belt A. Moreover, the dimensional stability of the toothed belt A when compared with the twisted cord is higher due to the characterictic of the cylindrically braided cord 7.

The twisting angle of the yarn 6 is the same as the twisting angle of the cylindrically braided cord 7 and accordingly, the angle of the monofilament to the axial line of the cord of the cylindrically braided cord 7 is 0° . Consequently, the dynamic adhesive strength is greatly improved by higher resistance of the matrix rubber of the monofilament to the shearing stress.

In the above embodiment, if the center cord is provided in a hollow part of the cylindrically braided cord 7, the dimensional stability, in addition to the flex fatigue, will be improved.

The toothed belt A is shown for a rubber. However, the belt is not limited to such toothed belt A, but covers an industrial belt such as a conveyor belt and a transmission belt like a flat belt and a ribbed belt. The present invention also can be applied to rubbers other than belts, for example, tires and hoses.

## Claims

1. A fiber-reinforced rubber (1,3) having a fiber reinforcement (2) of cylindrically braided cords (7) which are embedded therein,
characterized in that said cylindrically braided cords (7) are each comprised of more than four and even numbered yarns (6) twisted to the right as a S-twist and twisted to the left as a Z-twist and having an angle difference between a first twisting angle of each yarn (6) and a final twisting angle of said cylindrically braided cord (7) being set within 10° whereby a monofilament angle with respect to the axial line of the cord is set to be less than 10°.

2. A fiber-reinforced rubber according to claim 1, wherein said yarns (6) are comprised of inorganic, organic or metallic fibers.

3. A fiber-reinforced rubber according to claim 2, wherein said organic fibers are aramide fibers.

4. A fiber-reinforced rubber according to any of the claims 1 to 3, whereinsaid yarns (6) are comprised of long and/or short fiber spun yarns.

5. A fiber-reinforced rubber according to any of the claims 1 to 4, wherein a center cord is provided inside a hollow part of said cylindriacally braided cords (7).

6. A fiber-reinforced rubber according to any of the claims 1 to 5 and forming a transmission belt (A) having a belt base that comprises a stretching rubber ply (1) and a plurality of teeth (3) which are formed on one side thereof, whereby said fiber reinforcement is embedded in said stretching rubber ply (1).

7. A fiber-reinforced rubber according to any of the claims 1 to 5 and forming a conveyor belt, a tire or a hose.

## Patentansprüche

1. Faserverstärkter Gummi (1, 3) mit einer Faserverstärkung (2) aus zylindrisch geflochtenen Korden (7), die darin eingebettet sind,
dadurch gekennzeichnet, daß die zylindrisch geflochtenen Korden (7) jeweils aus mehr als vier und einer geraden Anzahl von Garnen (6) bestehen, die nach rechts als ein S-Drall und nach links als ein Z-Drall gedreht sind und einen Winkelunterschied zwischen einem ersten Drehwinkel jedes Garnes (6) und einem abschließenden Drehwinkel des zylindrisch geflochtenen Kords (7) haben, der innerhalb von 10° liegt, wodurch ein Monofilamentwinkel in Bezug auf die axiale Linie des Kordes auf weniger als 10° eingestellt wird.

2. Faserverstärkter Gummi nach Anspruch 1, bei welchem die Garne (6) aus anorganischen, organischen oder metallischen Fasern bestehen.

3. Faserverstärkter Gummi nach Anspruch 2, bei welchem die organischen Fasern Aramidfasern sind.

4. Faserverstärkter Gummi nach einem der Ansprüche 1 bis 3, bei welchem die Garne (6) aus Garnen bestehen, die aus langen und/oder kurzen Fasern gesponnen sind.

5. Faserverstärkter Gummi nach einem der Ansprüche 1 bis 4, bei welchem ein mittlerer Kord innerhalb eines hohlen Teils der zylindrisch geflochtenen Korde (7) vorgesehen ist.

6. Faserverstärkter Gummi nach einem der Ansprüche 1 bis 5, der einen Transmissionsriemen (A) mit einer Riemenbasis bildet, die aus einer Streckgummischicht (1) und einer Vielzahl von Zähnen (3) besteht, die an deren einer Seite ausgebildet sind, wobei die Faserverstärkung in die Streckgummischicht (1) eingebettet ist.

7. Faserverstärkter Gummi nach einem der Ansprüche 1 bis 5, welcher einen Förderriemen, einen Reifen oder einen Schlauch ausbildet.

## Revendications

1. Caoutchouc (1, 3) renforcé par fibres, à renforcement (2) par fibres des cordes (7) câblées de façon cylindrique, qui sont y noyées,
**caractérisé** en ce que chacune desdites cordes (7) câblées de façon cylindrique est constituée par plus de quatre fils (6) en nombre pair, qui sont orientés à tortillon vers la droite et orientés à tortillon vers la gauche, et qui présentent une différence angulaire entre un premier angle de tortillon de chaque fil (6) et un angle de tortillon final de ladite corde (7) câblées de façon cylindrique, cette différence étant ajustée dans la gamme de 10°, ce qui ajuste un angle unifilaire, relatif à la ligne axiale de la corde, à une valeur plus petite que 10°.

2. Caoutchouc renforcé par fibres selon la revendication 1, dans lequel lesdits fils (6) sont constitués par des fibres inorganiques, organiques ou métalliques.

3. Caoutchouc renforcé par fibres selon la revendication 2, dans lequel lesdites fibres sont des fibres en aramide.

4. Caoutchouc renforcé par fibres selon une quelconque des revendications 1 à 3, dans lequel lesdits fils (6) sont constitués par des longues et/ou courts fils en fibres filés.

5. Caoutchouc renforcé par fibres selon une quelconque des revendications 1 à 4, dans lequel une corde centrale est prévue à l'intérieur d'une partie creuse desdites cordes (7) câblées de façon cylindrique.

6. Caoutchouc renforcé par fibres selon une quelconque des revendications 1 à 5, qui constitue une courroie de transmission (A) à une base de courroie qui comprend une couche en caoutchouc d'allongement (1) et une pluralité de dents (3) formées sur un côté de ladite base de courroie, ledit renforcement à fibres étant noyé dans ladite couche en caoutchouc d'allongement (1).

7. Caoutchouc renforcé par fibres selon une quelconque des revendications 1 à 5, qui constitue une courroie de transport, un pneumatique, ou un tuyau souple.
